Europäisches Patentamt

European Patent Office

Office européen des brevets

(19)

(11) **EP 1 727 324 A1**

(12) **EUROPÄISCHE PATENTANMELDUNG**

(43) Veröffentlichungstag:
**29.11.2006 Patentblatt 2006/48**

(51) Int Cl.:
***H04L 25/03*** (2006.01)

(21) Anmeldenummer: 05011390.1

(22) Anmeldetag: **25.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **SIEMENS AKTIENGESELLSCHAFT 80333 München (DE)**

(72) Erfinder:
• **Schulz, Egon, Dr.**
  **80993 München (DE)**
• **Zirwas, Wolfgang**
  **82194 Gröbenzell (DE)**

(54) **Funk-Übertragung mit variabler Länge des Guard Intervals**

(57)  Die Erfindung betrifft ein Verfahren zur Übertragung von Informationen per Funk von einem Sender zu einem Empfänger, insbesondere zur Übertragung von OFDM-Symbolen. Mindestens ein erstes Symbol einer ersten Gesamtlänge ($T_{SYMBOL}$) wird übertragen, umfassend einen ersten Zeitabschnitt (DATA) mit ersten Nutzdaten und einen zweiten Zeitabschnitt (GI) mit zyklischen Wiederholungen der ersten Nutzdaten. Weiterhin wird mindestens ein zweites Symbol der ersten Gesamtlänge ($T_{SYMBOL}$) übertragen, umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten. Weiterhin betrifft die Erfindung einen Sender, einen Empfänger und eine netzseitige Einrichtung zur Durchführung des Verfahrens.

## FIG 2

EP 1 727 324 A1

**Beschreibung**

Die Erfindung betrifft Verfahren zur Übertragung von Informationen per Funk von einem Sender zu einem Empfänger, bei dem Symbole einer ersten Gesamtlänge übertragen werden, umfassend einen ersten Zeitabschnitt mit ersten Nutzdaten und einen zweiten Zeitabschnitt mit zyklischen Wiederholungen der ersten Nutzdaten.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen Sender und Empfänger übertragen. Bei den Funkstationen kann es sich hierbei je nach konkreter Ausgestaltung des Funkkommunikationssystems um verschiedenartige Teilnehmerstationen oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/ Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Um eine möglichst effiziente Übertragung von Daten zu erreichen, zerlegt man das gesamte zur Verfügung stehende Frequenzband in mehrere Subträger (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Datenübertragung hinsichtlich der Verteilung der zu übertragenden Daten auf die unterschiedlichen Subträger, d.h., die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung einer Anzahl von Subträgern an unterschiedliche Teilnehmerstationen effizient ausgenutzt werden.

Ein Beispiel für ein Mehrträgerübertragungsverfahren ist OFDM (Orthogonal Frequency Division Multiplexing), bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Durch den meist sehr geringen Abstand der Subträger und der Schmalbandigkeit der auf den einzelnen Subträger übertragenen Signale bei OFDM soll gewährleistet werden, dass die Übertragung innerhalb der einzelnen Subträger im allgemeinen nicht frequenzselektiv ist. Dies vereinfacht am Empfänger die Signalentzerrung.

Der Erfindung liegt die Aufgabe zugrunde, effiziente Verfahren zur Kommunikation per Funk aufzuzeigen. Weiterhin sollen geeignete Vorrichtungen zur Durchführung der Verfahren vorgestellt werden.

Diese Aufgabe wird durch ein Verfahren mit den Merkmalen des Anspruchs 1, sowie durch ein Verfahren und durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Übertragung von Informationen per Funk von einem Sender zu einem Empfänger wird mindestens ein erstes Symbol einer ersten Gesamtlänge übertragen, welches einen ersten Zeitabschnitt mit ersten Nutzdaten und einen zweiten Zeitabschnitt mit zyklischen Wiederholungen der ersten Nutzdaten umfasst. Weiterhin wird mindestens ein zweites Symbol der ersten Gesamtlänge übertragen, welches einen dritten gegenüber dem ersten Zeitabschnitt unterschiedlich langen Zeitabschnitt mit zweiten Nutzdaten und einen vierten gegenüber dem zweiten Zeitabschnitt unterschiedlich langen Zeitabschnitt mit zyklischen Wiederholungen der zweiten Nutzdaten umfasst.

Vorteilhafterweise handelt es sich bei dem Sender um eine netzseitige Einrichtung eines Funkkommunikationssystems und bei dem Empfänger um eine mobile oder stationäre Teilnehmerstation des Systems oder umgekehrt. Die Erfindung kann sowohl die Übertragung in Aufwärtsrichtung als auch in Abwärtsrichtung betreffen.

Es werden Symbole übertragen, welche im Zeitbereich aus zumindest zwei Zeitabschnitten bestehen: einem Zeitabschnitt mit Nutzdaten und einem Zeitabschnitt mit zyklischen Wiederholungen der Nutzdaten. Es ist möglich, dass die Symbole weitere Zeitabschnitte aufweisen, vorteilhafterweise bestehen die Symbole jedoch ausschließlich aus den beiden genannten Zeitabschnitten. In diesem Fall ergibt sich die Gesamtlänge eines Symbols als die Summe der Längen der beiden genannten Zeitabschnitte.

Es wird zumindest ein erstes Symbol und zumindest ein zweites Symbol von dem Sender an den Empfänger übertragen. Die Übertragung der beiden Symbole erfolgt vorzugsweise nacheinander, eine gleichzeitige Übertragung ist jedoch auch möglich. Die beiden Symbole weisen die gleiche Gesamtlänge auf, wobei sich sowohl die beiden Längen der Zeitabschnitte für Nutzdaten als auch die beiden Längen der Zeitabschnitte der zyklischen Wiederholungen jeweils voneinander unterscheiden. Die Gesamtlänge des ersten und des zweiten Symbols muss nicht exakt die gleiche sein. So ist es möglich, dass sich die Gesamtlänge des ersten Symbols von der Gesamtlänge des zweiten Symbols innerhalb eines Toleranzbereichs unterscheidet.

Der zweite und der vierte Zeitabschnitt können zur Vermeidung von Intersymbol-Interferenzen, d.h. zur Vermeidung von Interferenzen zwischen zeitlich aufeinander folgend gesendeten Symbolen, eingesetzt werden. Diese Interferenzen entstehen aufgrund von unterschiedlichen Mehrwegelaufzeiten des Funkkanals. Zur Vermeidung von Inter-Carrier-Interferenzen, d.h. von Interferenzen zwischen benachbarten Subträgern, wird das zur Vermeidung von Intersymbol-Interferenzen eingeführte Schutzintervall, d.h. der zweite und der vierte Zeitabschnitt, mit zyklischen Ergänzungen gefüllt.

In Weiterbildung der Erfindung erfolgt ein Übergang von der Übertragung des mindestens einen ersten Symbols zu der Übertragung des mindestens einen zweiten Symbols aufgrund von mindestens einer Eigenschaft des Übertragungskanals zwischen dem Sender und dem Empfänger und/oder von einer Übertragungsqualität. So können beispielsweise die aktuelle Kanalimpulsantwort und/oder das aktuelle und/oder ein erwünschtes Signal-zu-Rausch-Verhältnis in die Entscheidung über den Übergang zwischen den verschieden aufgebauten Symbolen einbezogen werden. Die Entscheidung über den Übergang wird vorzugsweise netzseitig getroffen und der betroffenen Teilnehmerstation signalisiert.

Bei einem zweiten erfindungsgemäßen Verfahren zur Übertragung von Informationen zwischen einer netzseitigen Funkeinrichtung und Teilnehmerstationen eines Funkkommunikationssystems wird mindestens ein erstes Symbol einer ersten Gesamtlänge, welches einen ersten Zeitabschnitt mit ersten Nutzdaten und einen zweiten Zeitabschnitt mit zyklischen Wiederholungen der ersten Nutzdaten umfasst, zwischen der netzseitigen Funkeinrichtung und einer ersten Teilnehmerstation übertragen. Weiterhin wird mindestens ein zweites Symbol der ersten Gesamtlänge, umfassend einen dritten gegenüber dem ersten Zeitabschnitt unterschiedlich langen Zeitabschnitt mit zweiten Nutzdaten und einen vierten gegenüber dem zweiten Zeitabschnitt unterschiedlich langen Zeitabschnitt mit zyklischen Wiederholungen der zweiten Nutzdaten, zwischen der netzseitigen Funkeinrichtung und einer zweiten Teilnehmerstation übertragen.

Es werden Symbole übertragen, welche im Zeitbereich aus zumindest zwei Zeitabschnitten bestehen: einem Zeitabschnitt mit Nutzdaten und einem Zeitabschnitt mit zyklischen Wiederholungen der Nutzdaten. Es ist möglich, dass die Symbole weitere Zeitabschnitte aufweisen, vorteilhafterweise bestehen die Symbole jedoch ausschließlich aus den beiden genannten Zeitabschnitten. In diesem Fall ergibt sich die Gesamtlänge eines Symbols als die Summe der Längen der beiden genannten Zeitabschnitte.

Die Kommunikation zwischen der netzseitigen Funkeinrichtung und der ersten Teilnehmerstation kann sowohl in Aufwärts- als auch in Abwärtsrichtung erfolgen. Ebenso kann die Kommunikation zwischen der netzseitigen Funkeinrichtung und der zweiten Teilnehmerstation unabhängig von der Richtung der Kommunikation zwischen der netzseitigen Funkeinrichtung und der ersten Teilnehmerstation sowohl in Aufwärts- als auch in Abwärtsrichtung erfolgen. Das mindestens eine erste Symbol und das mindestens eine zweite Symbol können gleichzeitig oder nacheinander zwischen der netzseitigen Funkeinrichtung und den Teilnehmerstationen übertragen werden. Die beiden Symbole weisen die gleiche Gesamtlänge auf, wobei sich sowohl die beiden Längen der Zeitabschnitte für Nutzdaten als auch die beiden Längen der Zeitabschnitte der zyklischen Wiederholungen jeweils voneinander unterscheiden. Die Gesamtlänge des ersten und des zweiten Symbols muss nicht exakt die gleiche sein. So ist es möglich, dass sich die Gesamtlänge des ersten Symbols von der Gesamtlänge des zweiten Symbols innerhalb eines Toleranzbereichs unterscheidet.

Bei der netzseitigen Funkeinrichtung handelt es sich um eine netzseitige Einrichtung eines Funkkommunikationssystems. Die erste und die zweite Teilnehmerstation, mit welchen sie kommuniziert, können mobile oder stationäre Funkstationen darstellen.

Der zweite und der vierte Zeitabschnitt können zur Vermeidung von Intersymbol-Interferenzen, d.h. zur Vermeidung von Interferenzen zwischen zeitlich aufeinander folgend gesendeten Symbolen, eingesetzt werden. Diese Interferenzen entstehen aufgrund von unterschiedlichen Mehrwegelaufzeiten des Funkkanals. Zur Vermeidung von Inter-Carrier-Interferenzen, d.h. von Interferenzen zwischen benachbarten Subträgern, wird das zur Vermeidung von Intersymbol-Interferenzen eingeführte Schutzintervall, d.h. der zweite und der vierte Zeitabschnitt, mit zyklischen Ergänzungen gefüllt.

In Weiterbildung der Erfindung sendet die netzseitige Funkeinrichtung der ersten Teilnehmerstation Informationen über die Längen des ersten und/oder des zweiten Zeitabschnittes und der zweiten Teilnehmerstation Informationen über die Längen des dritten und/oder des vierten Zeitabschnittes. Diese Informationen können explizit die jeweiligen Längen angeben. Alternativ ist es möglich, dass die Informationen den Teilnehmerstationen ermöglichen, die jeweiligen Längen zu ermitteln. Vorteilhafterweise entscheidet die netzseitige Funkeinrichtung oder eine mit ihr verbundene netzseitige Einrichtung über die zu verwendenden Längen der Zeitabschnitte, z.B. in Abhängigkeit von einer Eigenschaft eines Übertragungskanals zwischen der netzseitigen Funkeinrichtung und der jeweiligen Teilnehmerstation und/oder von einer Übertragungsqualität.

Besonders vorteilhaft ist es, wenn OFDM-Symbole auf einer Mehrzahl von Subträgern eines Frequenzbandes übertragen werden, und es sich bei dem ersten und dem zweiten Symbol um OFDM-Symbole handelt.

Einer vorteilhaften Ausgestaltung der Erfindung gemäß unterscheidet sich bei der sender- und/oder empfängerseitigen Verarbeitung der Symbole die Abtastrate der Nutzdaten des dritten Zeitabschnittes von der Abtastrate der Nutzdaten des ersten Zeitabschnittes, wobei die Anzahl der Abtastwerte der Nutzdaten des dritten Zeitabschnittes gleich der Anzahl der Abtastwerte der Nutzdaten des ersten Zeitabschnittes ist. Die Anzahl der Abtastwerte der Nutzdaten ist trotz unterschiedlicher Dauer des ersten und des dritten Zeitabschnittes gleich, da für den ersten und den dritten Zeitabschnitt unterschiedliche Abtastraten verwendet werden.

Vorteilhaft ist es, wenn sich die Anzahl der für die Übertragung des mindestens einen ersten Symbols verwendeten Subträger von der Anzahl der für die Übertragung des mindestens einen zweiten Symbols verwendeten Subträger unterscheidet. Weiterhin kann sich die Breite der einzelnen für die Übertragung des mindestens einen ersten Symbols verwendeten Subträger von der Breite der einzelnen für die Übertragung des mindestens einen zweiten Symbols verwendeten Subträger unterscheiden.

Es ist möglich, dass die Breite des für die Übertragung des mindestens einen ersten Symbols verwendeten Frequenzbereiches gleich der Breite des für die Übertragung des mindestens einen zweiten Symbols verwendeten Frequenzbereiches ist. Alternativ kann die Breite des für die Übertragung des mindestens einen ersten Symbols verwendeten Frequenzbereiches sich von der Breite des für die Übertragung des mindestens einen zweiten Symbols verwendeten Frequenzbereiches unterscheiden.

In Ausgestaltung der Erfindung ist die Größe der sender-und/oder empfängerseitig verwendeten Fourier-Transformation bzw. inversen Fourier-Transformation bei der Verarbeitung des mindestens einen ersten Symbols die gleiche wie bei der Verarbeitung des mindestens einen zweiten Symbols. Diese Ausgestaltung ermöglicht eine betreffend die Hardware von Sender und Empfänger unaufwendige Implementierung der erfindungsgemäßen Verfahren.

Der erfindungsgemäße Sender zur Versendung von Informationen per Funk an einen Empfänger weist Mittel auf zum Erstellen und Versenden von mindestens einem ersten Symbol einer ersten Gesamtlänge, welches einen ersten Zeitabschnitt mit ersten Nutzdaten und einen zweiten Zeitabschnitt mit zyklischen Wiederholungen der ersten Nutzdaten umfasst, und Mittel zum Erstellen und Versenden von mindestens einem zweiten Symbol der ersten Gesamtlänge, welches einen dritten gegenüber dem ersten Zeitabschnitt unterschiedlich langen Zeitabschnitt mit zweiten Nutzdaten und einen vierten gegenüber dem zweiten Zeitabschnitt unterschiedlich langen Zeitabschnitt mit zyklischen Wiederholungen der zweiten Nutzdaten umfasst.

Der erfindungsgemäße Empfänger zum Empfangen von Informationen per Funk von einem Sender weist Mittel auf zum Empfangen und Verarbeiten von mindestens einem ersten Symbol einer ersten Gesamtlänge, welches einen ersten Zeitabschnitt mit ersten Nutzdaten und einen zweiten Zeitabschnitt mit zyklischen Wiederholungen der ersten Nutzdaten umfasst, und Mittel zum Empfangen und Verarbeiten von mindestens einem zweiten Symbol der ersten Gesamtlänge, welches einen dritten gegenüber dem ersten Zeitabschnitt unterschiedlich langen Zeitabschnitt mit zweiten Nutzdaten und einen vierten gegenüber dem zweiten Zeitabschnitt unterschiedlich langen Zeitabschnitt mit zyklischen Wiederholungen der zweiten Nutzdaten umfasst.

Die erfindungsgemäße netzseitige Einrichtung eines Funkkommunikationssystems zur Versendung von Informationen an Teilnehmerstationen und zum Empfangen von Informationen von Teilnehmerstationen weist Mittel auf zum zum Versenden und/oder Empfangen von mindestens einem ersten Symbol einer ersten Gesamtlänge, welches einen ersten Zeitabschnitt mit ersten Nutzdaten und einen zweiten Zeitabschnitt mit zyklischen Wiederholungen der ersten Nutzdaten umfasst, an eine bzw. bei einer Übertragung in Aufwärtsrichtung von einer ersten Teilnehmerstation, und Mittel zum Versenden und/oder Empfangen von mindestens einem zweiten Symbol der ersten Gesamtlänge, welches einen dritten gegenüber dem ersten Zeitabschnitt unterschiedlich langen Zeitabschnitt mit zweiten Nutzdaten und einen vierten gegenüber dem zweiten Zeitabschnitt unterschiedlich langen Zeitabschnitt mit zyklischen Wiederholungen der zweiten Nutzdaten umfasst, an eine bzw. bei einer Übertragung in Aufwärtsrichtung von einer zweiten Teilnehmerstation.

Der erfindungsgemäße Sender, der erfindungsgemäße Empfänger und die erfindungsgemäße netzseitige Einrichtung eignen sich insbesondere zur Durchführung der erfindungsgemäßen Verfahren, wobei dies auch auf die Ausgestaltungen und Weiterbildungen zutreffen kann. Hierzu können sie weitere geeignete Mittel aufweisen, insbesondere Mittel zum Versenden und/ oder Empfangen von Symbolen auf einer Mehrzahl von Subträgern eines Frequenzbandes.

Im folgenden wird die Erfindung anhand eines Ausführungsbeispiels näher erläutert. Dabei zeigen:

Figur 1: einen Ausschnitt aus einem Funkkommunikationssystem,

Figur 2: den Aufbau eines OFDM-Symbols im Zeitbereich,

Figur 3: den Aufbau von OFDM-Symbolen im Zeitbereich und im Frequenzbereich.

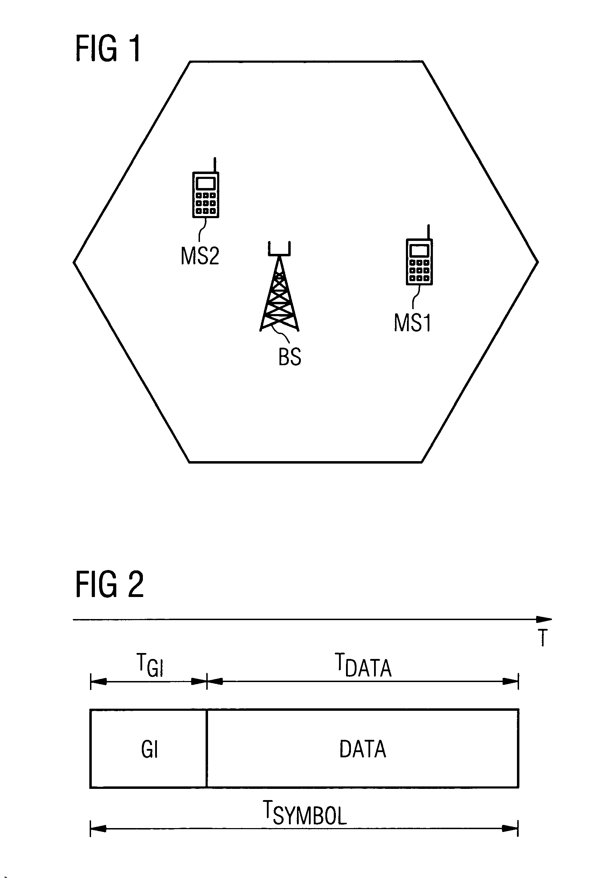

Figur 1 zeigt den als Sechseck dargestellten Funkabdeckungsbereich einer Basisstation BS. Bei der Basisstation BS kann es sich um eine netzseitige Einrichtung eines flächendeckenden oder eines lokalen Funkkommunikationssystems handeln. Im Funkabdeckungsbereich der Basisstation BS befinden sich die Teilnehmerstationen MS1 und MS2. Bei den Teilnehmerstationen MS1 und MS2 kann es sich um mobile oder stationäre Funkstationen, wie z.B. Telefone oder Computer, handeln. Die Kommunikation zwischen der Basisstation BS und den Teilnehmerstationen MS1 und MS2 kann sowohl in Aufwärts- als auch in Abwärtsrichtung erfolgen. Das im folgenden beschriebene erfindungsgemäße Vorgehen ist sowohl in Aufwärts- als auch in Abwärtsrichtung anwendbar.

Die Kommunikation zwischen der Basisstation BS und den Teilnehmerstationen MS1 und MS2 erfolgt unter Verwendung von OFDM. Hierzu wird ein breites Frequenzband eingesetzt, welches in eine Mehrzahl Subträgern untergliedert ist. Einer Teilnehmerstation MS1 oder MS2 können zur Kommunikation eines, mehrere oder alle der Subträger des zur Verfügung stehenden Frequenzbandes zugewiesen werden. Um Intersymbol-Interferenzen zwischen zeitlich benachbarten OFDM-Symbolen zu vermeiden, wird ein Schutzintervall (englisch: guard interval) mit zyklischer Fortsetzung verwendet. Die Verwendung von Schutzintervallen bei OFDM wird z.B. beschrieben in:

V. Engels, H. Rohling, S. Breide: "OFDM Übertragungsverfahren für den Digitalen Fernsehrundfunk", Sonderdruck aus den Rundfunktechnischen Mitteilungen 37. Jahrgang (1993), Heft 6, S. 260-270, TU Braunschweig.

Figur 2 zeigt den Aufbau eines OFDM-Symbols der Länge $T_{SYMBOL}$ im Zeitbereich T. Das Schutzintervall GI, welches zu Beginn oder am Ende des OFDM-Symbols stehen kann, weist die Länge $T_{GI}$ auf. Der Nutzdatenabschnitt DATA weist die Länge $T_{DATA}$ auf. Es gilt

$T_{SYMBOL} = T_{GI} + T_{DATA}$. Die Nutzdaten bestehen im allgemeinen aus einer Mehrzahl von Abtastwerten, während das Schutzintervall GI Wiederholungen dieser Abtastwerte beinhaltet.

Intersymbol-Interferenzen entstehen aufgrund von Mehrwegeübertragung über den Funkkanal zwischen Sender und Empfänger. Die Länge des Schutzintervalls GI sollte daher so gewählt werden, dass sie länger als die längste Mehrwegekomponente des Funkkanals ist. Die Verzögerung (englisch: delay spread) durch die Mehrwegeübertragung kann von 100 ns bei Indoor-Übertragungen bis zu mehrer μs bei Outdoor-Übertragungen reichen. Daher sollte für Outdoor-Übertragungen ein großes Schutzintervall GI zum Einsatz kommen, während bei Indoor-Übertragungen ein kurzes Schutzintervall GI ausreichend ist. Wird einerseits das Schutzintervall GI zu kurz gewählt, kann die Übertragungsqualität sinken. Andererseits entspricht ein langes Schutzintervall GI einer Übertragung von redundanten Informationen in großem Umfang, wodurch die Nutzdatenrate reduziert wird.

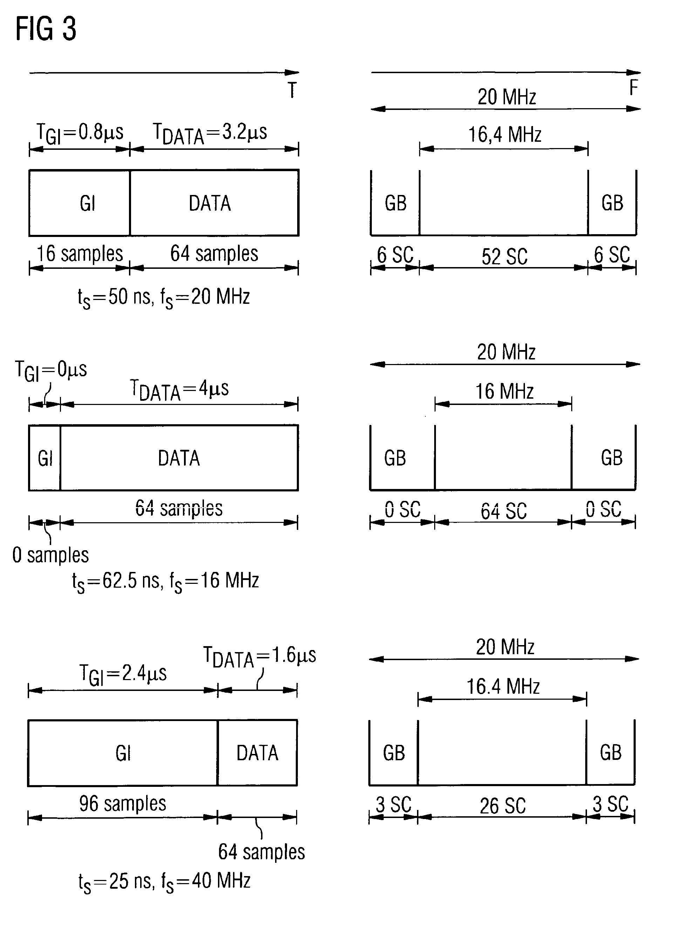

Figur 3 zeigt auf der linken Hälfte den Aufbau von OFDM-Symbolen im Zeitbereich T, und in der rechten Hälfte im Frequenzbereich F. Gemäß der obersten Teildarstellung weist das Schutzintervall GI eine Länge $T_{GI}$ von 0.8 μs, und der Nutzdatenabschnitt DATA eine Länge $T_{DATA}$ von 3.2 μs auf. Somit beträgt die Gesamtsymboldauer 0.8μs+3.2μs=4.0μs. Das Schutzintervall GI enthält 16 samples und der Nutzdatenabschnitt DATA enthält 64 samples, wobei ein sample einem Abtastwert bzw. einem Einzelsymbol entspricht. Es wird eine Abtastfrequenz $f_s$ on 20 MHz verwendet, bzw. eine Abtastdauer $t_s$ von 50 ns. Die Anzahl der samples ergibt sich aus

$$\frac{3.2\,\mu s}{50\,ns} = 64\ .$$

Gemäß der rechten Hälfte der obersten Teildarstellung steht für die betrachtete Kommunikation eine Bandbreite von 20 MHz zur Verfügung. Die Bandbreite von 20 MHz ist in 64 Subträger SC unterteilt. Aufgrund der bei OFDM sender- und empfängerseitig durchzuführenden FFT (Fast Fourier Transform) bzw. IFFT (Inverse Fast Fourier Transform) entspricht die Anzahl der Subträger SC der Anzahl der samples des Nutzdatenabschnitt DATA. Es werden 16.4 MHz für die Übertragung von Informationen verwendet, entsprechend 52 Subträgern SC. Hierbei werden 48 Subträger SC für die Nutzdaten und 4 Subträger SC für Pilotsignale eingesetzt. Auf den restlichen Subträgern SC, d.h. auf je 6 Subträgern SC auf den beiden Seiten der 52 Subträger SC, werden keine Informationen übertragen. Bei dieser Bandbreite handelt es sich um Schutzbänder GB (englisch: guard band). Diese werden eingesetzt, um zu vermeiden, dass die innerhalb der Bandbreite von 20 MHz übertragenen Informationen mit auf anderen Frequenzen übertragenen Informationen interferieren.

Erfindungsgemäß wird die Zeitdauer des Schutzintervalls GI variiert, wobei die Gesamtsymboldauer konstant bleibt. Die mittlere Teildarstellung der Figur 3 zeigt den extremen Fall, dass die Dauer $T_{GI}$ des Schutzintervalls GI 0 μs beträgt, während die Dauer $T_{DATA}$ des Nutzdatenabschnitts DATA der gesamten Symboldauer von 4 μs entspricht. Um trotz veränderter Dauer $T_{DATA}$ des Nutzdatenabschnitts DATA die Anzahl der samples des Nutzdatenabschnitts DATA konstant auf 64 samples zu halten, wird die Abtastfrequenz $f_s$ auf 16 MHz verringert bzw. die Abtastdauer $t_s$ auf 62.5 ns erhöht.

Da bei OFDM die Zeitdauer des Nutzdatenabschnitts DATA umgekehrt proportional zur Breite der Subträger SC ist, resultiert die Steigerung der Dauer $T_{DATA}$ des Nutzdatenabschnitts DATA in einer Reduzierung der Breite der Subträger SC. Daher benötigen die 64 Subträger SC, welche aufgrund der 64 samples des Nutzdatenabschnitts DATA verwendet werden, lediglich eine Bandbreite von 16 MHz. Da der Verbindung 20 MHz zur Verfügung stehen, liegen auf beiden Seiten der 16 MHz jeweils 2 MHz, welche Schutzbänder GB bilden. Somit werden gemäß der mittleren Darstellung der Figur 3 64 Subträger SC zur Übertragung von Informationen verwendet, wovon 60 Subträger SC für die Nutzdaten und 4 Subträger SC für Pilotsignale eingesetzt werden. Die restliche Bandbreite, d.h. zwei mal 2 MHz ist nicht in Subträger SC untergliedert, so dass die Schutzbänder GB jeweils Null Subträger umfassen.

Die unterste Teildarstellung von Figur 3 zeigt den Fall, dass die Länge $T_{GI}$ des Schutzintervalls GI gegenüber der obersten Teildarstellung erhöht ist. Sie beträgt 2.4 μs, während die Dauer $T_{DATA}$ des Nutzdatenabschnitts DATA lediglich 1.6 μs beträgt. Um zu erreichen, dass der Nutzdatenabschnitt DATA aus 64 samples besteht, wird die Abtastfrequenz $f_s$ auf 40 MHz erhöht, bzw. die Abtastdauer $t_s$ auf 25 ns verringert. Durch die Verkürzung der Dauer $T_{DATA}$ des Nutzdatenabschnitts DATA erhöht sich die Frequenzbreite der Subträger SC, so dass die gesamte Breite von 64 Subträgern SC 40 MHz beträgt. Zur Übertragung von Informationen werden 26 Subträger SC, entsprechenden einer gesamten Frequenzbreite von 16.4 MHz verwendet. Hierbei werden 22 Subträger SC für die Nutzdaten und 4 Subträger SC für Pilotsignale eingesetzt. Weiterhin werden auf beiden Seiten der 26 Subträger SC jeweils 3 Subträger SC nicht zur Übertragung von Informationen eingesetzt, sondern als Schutzbänder verwendet. Es existieren somit weitere 32 Subträger SC, welche über den 20 MHz Bereich herausragen und daher nicht verwendet werden.

Das anhand von Figur 3 beispielhaft erläutere Vorgehen lässt sich wie folgt zusammenfassen: die Länge des Schutzintervalls wird variiert. Da diese Variation bei konstanter Gesamtsymbollänge erfolgt, variiert auch die Länge des Nutzdatenabschnitts. Die Größe der empfangs- und senderseitig durchzuführenden Fourier-Transformation bzw. inversen Fourier-Transformation ist für alle Längen des Schutzintervalls GI gleich. Dies wird erreicht, indem die Abtastfrequenz verändert wird, so dass im Zeitbereich die Anzahl der samples des Nutzdatenabschnitts konstant ist. Aufgrund der Reziprozität zwischen der Länge des Nutzdatenabschnitts und der Breite der Subträger variiert die Breite der Subträger mit der Variation der Länge des Schutzintervalls. Dies bedeutet, dass bei gegebener Bandbreite für eine Verbindung, in Figur 3 20 MHz, die Gesamtbreite der Subträger der Verbindung kleiner oder größer als die gegebene Bandbreite sein kann. Im zweiten Fall können daher manche der Subträger nicht für die Verbindung verwendet werden. Während somit im Zeitbereich die Datenrate dadurch adaptiert wird, dass die Länge des Nutzdatenabschnitts verändert wird, erfolgt die Adaption der Datenrate im Frequenzbereich dadurch, dass eine unterschiedliche Anzahl an Subträgern für die Übertragung verwendet wird.

Die drei Teildarstellungen der Figur 3 können sich auf eine bestimmte Verbindung zwischen einer Basisstation und einer Teilnehmerstation beziehen, wobei zu einem ersten Zeitpunkt die OFDM-Symbole gemäß der obersten Teildarstellung aufgebaut sind, zu einem zweiten Zeitpunkt gemäß der mittleren Teildarstellung, und zu einem dritten Zeitpunkt gemäß der untersten Teildarstellung. Die Variation der Länge des Schutzintervalls erfolgt somit mit der Zeit. Weiterhin ist es möglich, dass die oberste Teildarstellung einer Verbindung zwischen einer Basisstation und einer ersten Teilnehmerstation, die mittlere Teildarstellung einer Verbindung zwischen der Basisstation und einer zweiten Teilnehmerstation, und die unterste Teildarstellung einer Verbindung zwischen der Basisstation und einer dritten Teilnehmerstation entspricht. In diesem Fall erfolgt die Variation der Länge des Schutzintervalls mit der Verbindung. Eine zusätzliche Variation mit der Zeit für die einzelnen Verbindungen ist möglich.

Die Variation der Länge des Schutzintervalls erfolgt vorzugsweise in Abhängigkeit von der Kanalimpulsantwort und/oder von dem gewünschten oder dem aktuellen Signal-zu-Rausch-Verhältnis der jeweiligen Verbindung. So bietet sich bei langen Verzögerungen aufgrund der Mehrwegeausbreitung bzw. bei hohen gewünschten bzw. niedrigen aktuellen Signal-zu-Rausch-Verhältnissen die Verwendung eines langen Schutzintervalls an. Die Kanalimpulsantwort des Übertragungskanals zwischen Sender und Empfänger wird von dem Empfänger bestimmt. Handelt es sich bei dem Empfänger um eine Teilnehmerstation, informiert die Teilnehmerstation die Basisstation über die von ihr ermittelte Kanalimpulsantwort. Entsprechendes gilt auch in Bezug auf das aktuelle Signal-zu-Rausch-Verhältnis. Die zu verwendenden Länge des Schutzintervalls oder eine andere Größe, aus welcher sich die Länge des Schutzintervalls ergibt, wie beispielsweise die Abtastfrequenz, wird von der Basisstation oder von einer anderen netzseitigen Einrichtung bestimmt und der Teilnehmerstation signalisiert. Da sich die Eigenschaften des Übertragungskanals in der Regel langsam verändern, ist eine solche Signalisierung nicht oft nötig, so dass der hierdurch erzeugte Signalisierungs-Overhead nicht groß ist.

Die beschriebene Vorgehensweise weist den Vorteil auf, dass aufgrund der konstanten Gesamtsymbollänge die Zeitrahmenstruktur erhalten bleibt. Dies erleichtert die Synchronisierung zwischen Sender und Empfänger und ist besonders bei TDMA-Verfahren von Vorteil. Durch die Anpassung der Abtastfrequenz an die Länge des Nutzdatenabschnitt ist es möglich, dass eine Fourier-Transformation lediglich einer einzigen Größe durchführbar sein muss. Dies reduziert die sender- und empfängerseitige Komplexität.

Für die Abtastfrequenz wird vorzugsweise eine Maximal- und ein Minimalwert vorgegeben, wie beispielsweise 16 MHz und 40 MHz in Figur 3, wobei die verwendeten Abtastfrequenzen zwischen dem Maximal- und ein Minimalwert liegen müssen. Ferner sollten für die Abtastfrequenz nicht beliebige Werte zwischen dem Maximal- und ein Minimalwert verwendet werden, vielmehr soll sich bei gegebener Gesamtsymbollänge eine ganzzahlige Anzahl von samples pro Gesamtsymbol ergeben.

Die Erfindung ermöglicht die flexible Anpassung der Zusammensetzung eines OFDM-Symbols in Abhängigkeit von den aktuellen Funkübertragungsbedingungen und/oder von der gewünschten Übertragungsqualität. Diese Anpassung kann während der Verbindung erfolgen, indem die Basisstation der jeweiligen Teilnehmerstation die bei der OFDM-Verarbeitung zu verwendenden Parameter signalisiert. Für Verbindungen zu verschiedenen Teilnehmerstationen kann die Basisstation verschiedene Aufteilungen der OFDM-Symbole verwenden. Die Kommunikation zwischen der Basisstation und den verschiedenen Teilnehmerstationen kann hierbei gemäß einer TDMA-Betriebsweise nacheinander und/oder gemäß einer FDMA-Betriebsweise gleichzeitig erfolgen.

Während die Erfindung anhand einer OFDM-Kommunikation erläutert wurde, ist sie nicht auf OFDM-Kommunikationssysteme beschränkt. Vielmehr können die Symbole mit dem variablen Schutzintervall auch auf einem Subträger anstelle einer Mehrzahl von Subträgern übertragen werden.

**Patentansprüche**

1. Verfahren zur Übertragung von Informationen per Funk von einem Sender (BS, MS1, MS2) zu einem Empfänger (BS, MS1, MS2), bei dem
mindestens ein erstes Symbol einer ersten Gesamtlänge ($T_{SYMBOL}$) übertragen wird, umfassend einen ersten Zeitabschnitt (DATA) mit ersten Nutzdaten und einen zweiten Zeitabschnitt (GI) mit zyklischen Wiederholungen der ersten Nutzdaten,

**dadurch gekennzeichnet,**
**dass** mindestens ein zweites Symbol der ersten Gesamtlänge ($T_{SYMBOL}$) übertragen wird, umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten.

2. Verfahren nach Anspruch 1, bei dem
ein Übergang von der Übertragung des mindestens einen ersten Symbols zu der Übertragung des mindestens einen zweiten Symbols erfolgt aufgrund von mindestens einer Eigenschaft des Übertragungskanals zwischen dem Sender (BS, MS1, MS2) und dem Empfänger (BS, MS1, MS2) und/oder von einer Übertragungsqualität.

3. Verfahren zur Übertragung von Informationen zwischen einer netzseitigen Funkeinrichtung (BS) und Teilnehmerstationen (MS1, MS2) eines Funkkommunikationssystems, bei dem
mindestens ein erstes Symbol einer ersten Gesamtlänge ($T_{SYMBOL}$), umfassend einen ersten Zeitabschnitt (DATA) mit ersten Nutzdaten und einen zweiten Zeitabschnitt (GI) mit zyklischen Wiederholungen der ersten Nutzdaten, zwischen der netzseitigen Funkeinrichtung (BS) und einer ersten Teilnehmerstation (BS1) übertragen wird,

**dadurch gekennzeichnet,**
**dass** mindestens ein zweites Symbol der ersten Gesamtlänge ($T_{SYMBOL}$), umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten, zwischen der netzseitigen Funkeinrichtung (BS) und einer zweiten Teilnehmerstation (MS2) übertragen wird.

4. Verfahren nach Anspruch 3, bei dem die netzseitige Einrichtung (BS)
der ersten Teilnehmerstation (MS1) Informationen über die Längen des ersten (DATA) und/oder des zweiten (GI) Zeitabschnitts sendet, und
der zweiten Teilnehmerstation (MS2) Informationen über die Längen des dritten (DATA) und/oder des vierten (GI) Zeitabschnitts sendet.

5. Verfahren nach einem der Ansprüche 1 bis 4, bei dem OFDM-Symbole auf einer Mehrzahl von Subträgern (SC) eines Frequenzbandes übertragen werden,
und es sich bei dem ersten Symbol und dem zweiten Symbol um OFDM-Symbole handelt.

**6.** Verfahren nach einem der Ansprüche 1 bis 5, bei dem sich bei der sender- und/oder empfängerseitigen Verarbeitung der Symbole die Abtastrate ($f_s$) der Nutzdaten des dritten Zeitabschnitts (DATA) von der Abtastrate ($f_s$) der Nutzdaten des ersten Zeitabschnitts (DATA) unterscheidet, wobei die Anzahl der Abtastwerte (samples) der Nutzdaten des dritten Zeitabschnitts (DATA) gleich der Anzahl der Abtastwerte (samples) der Nutzdaten des ersten Zeitabschnitts (DATA) ist.

**7.** Verfahren nach einem der Ansprüche 5 bis 6, bei dem sich die Anzahl der für die Übertragung des mindestens einen ersten Symbols verwendeten Subträger (SC) von der Anzahl der für die Übertragung des mindestens einen zweiten Symbols verwendeten Subträger (SC) unterscheidet.

**8.** Verfahren nach einem der Ansprüche 5 bis 7, bei dem sich die Breite der einzelnen für die Übertragung des mindestens einen ersten Symbols verwendeten Subträger (SC) von der Breite der einzelnen für die Übertragung des mindestens einen zweiten Symbols verwendeten Subträger (SC) unterscheidet.

**9.** Verfahren nach einem der Ansprüche 1 bis 8, bei dem die Breite des für die Übertragung des mindestens einen ersten Symbols verwendeten Frequenzbereiches gleich der Breite des für die Übertragung des mindestens einen zweiten Symbols verwendeten Frequenzbereiches ist.

**10.** Verfahren nach einem der Ansprüche 1 bis 8, bei dem sich die Breite des für die Übertragung des mindestens einen ersten Symbols verwendeten Frequenzbereiches von der Breite des für die Übertragung des mindestens einen zweiten Symbols verwendeten Frequenzbereiches unterscheidet.

**11.** Verfahren nach einem der Ansprüche 1 bis 10, bei dem die Größe der sender- und/oder empfängerseitig verwendeten Fourier-Transformation bei der Verarbeitung des mindestens einen ersten Symbols die gleiche ist wie bei der Verarbeitung des mindestens einen zweiten Symbols.

**12.** Sender (BS, MS1, MS2) zur Versendung von Informationen per Funk an einen Empfänger (BS, MS1, MS2), mit Mitteln zum Erstellen und Versenden von mindestens einem ersten Symbol einer ersten Gesamtlänge ($T_{SYMBOL}$), umfassend einen ersten Zeitabschnitt (DATA) mit ersten Nutzdaten und einen zweiten Zeitabschnitt (GI) mit zyklischen Wiederholungen der ersten Nutzdaten,
**gekennzeichnet durch**
Mittel zum Erstellen und Versenden von mindestens einem zweiten Symbol der ersten Gesamtlänge ($T_{SYMBOL}$), umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten.

**13.** Empfänger (BS, MS1, MS2) zum Empfangen von Informationen per Funk von einem Sender (BS, MS1, MS2), mit
Mitteln zum Empfangen und Verarbeiten von mindestens einem ersten Symbol einer ersten Gesamtlänge ($T_{SYMBOL}$), umfassend einen ersten Zeitabschnitt (DATA) mit ersten Nutzdaten und einen zweiten Zeitabschnitt (GI) mit zyklischen Wiederholungen der ersten Nutzdaten,
**gekennzeichnet durch**
Mittel zum Empfangen und Verarbeiten von mindestens einem zweiten Symbol der ersten Gesamtlänge ($T_{SYMBOL}$), umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten.

**14.** Netzseitige Einrichtung (BS) eines Funkkommunikationssystems zur Versendung von Informationen an Teilnehmerstationen (MS1, MS2) und zum Empfangen von Informationen von Teilnehmerstationen (BS), mit
Mitteln zum Versenden und/oder Empfangen von mindestens einem ersten Symbol einer ersten Gesamtlänge ($T_{SYMBOL}$), umfassend einen ersten Zeitabschnitt (DATA) mit ersten Nutzdaten und einen zweiten Zeitabschnitt (GI) mit zyklischen Wiederholungen der ersten Nutzdaten, an eine bzw. von einer ersten Teilnehmerstation (MS1, MS2),
**gekennzeichnet durch**
Mittel zum Versenden und/oder Empfangen von mindestens einem zweiten Symbol der ersten Gesamtlänge ($T_{SYMBOL}$), umfassend einen dritten gegenüber dem ersten Zeitabschnitt (DATA) unterschiedlich langen Zeitabschnitt (DATA) mit zweiten Nutzdaten und einen vierten gegenüber dem zweiten Zeitabschnitt (GI) unterschiedlich langen Zeitabschnitt (GI) mit zyklischen Wiederholungen der zweiten Nutzdaten, an eine bzw. von einer zweiten Teilnehmerstation (MS1, MS2).

# FIG 1

# FIG 2

# FIG 3

**Europäisches Patentamt**

## EUROPÄISCHER RECHERCHENBERICHT

Nummer der Anmeldung

EP 05 01 1390

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 938 193 A (SONY INTERNATIONAL GMBH) 25. August 1999 (1999-08-25) * Spalte 2, Absatz 12-17; Abbildung 4 * * Spalte 7, Absatz 49 - Spalte 8, Absatz 55; Anspruch 4 * ----- | 1-14 | H04L25/03 |
| A | DE 102 13 872 A1 (SIEMENS AG) 16. Oktober 2003 (2003-10-16) * Spalte 5, Absatz 30 - Absatz 33; Ansprüche 1-4; Abbildungen 3,4 * ----- | 1-14 | |
| A | US 2005/073971 A1 (MUKAI MANABU) 7. April 2005 (2005-04-07) * Seite 3, Absatz 53 - Absatz 58 * ----- | 1-14 | |

RECHERCHIERTE SACHGEBIETE (Int.Cl.7)

H04L

Der vorliegende Recherchenbericht wurde für alle Patentansprüche erstellt

| Recherchenort | Abschlußdatum der Recherche | Prüfer |
|---|---|---|
| Den Haag | 20. September 2005 | Bischof, J-L |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 1390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2005

| Im Recherchenbericht angeführtes Patentdokument | Datum der Veröffentlichung | Mitglied(er) der Patentfamilie | Datum der Veröffentlichung |
|---|---|---|---|
| EP 0938193 A | 25-08-1999 | JP 2000032565 A<br>US 6567383 B1 | 28-01-2000<br>20-05-2003 |
| DE 10213872 A1 | 16-10-2003 | KEINE | |
| US 2005073971 A1 | 07-04-2005 | JP 2005110014 A | 21-04-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- OFDM Übertragungsverfahren für den Digitalen Fernsehrundfunk. **V. ENGELS ; H. ROHLING ; S. BREIDE.** Sonderdruck aus den Rundfunktechnischen Mitteilungen. Jahrgang, 1993, vol. 37, 260-270